# EUROPEAN PATENT SPECIFICATION

(11) **EP 3 936 821 B1**
(45) Date of publication and mention of the grant of the patent: **11.06.2025**
(21) Application number: 19917743.7
(22) Date of filing: 16.07.2019
(51) Int. Cl.: G01C 21/20

(54) **METHOD FOR SEEKING A DELIVERY LOCKER, DEVICE, AND STORAGE MEDIUM**
VERFAHREN ZUR SUCHE EINES LIEFERFACHS, VORRICHTUNG, UND SPEICHERMEDIUM
PROCÉDÉ DE RECHERCHE D'UN CASIER DE LIVRAISON, DISPOSITIF, ET SUPPORT DE STOCKAGE

(30) Priority: 04.03.2019 CN 201910159526
(43) Date of publication of application: 12.01.2022
(73) Proprietor: HIVE BOX NETWORK TECHNOLOGY LIMITED, Shenzhen 518000 (CN)
(72) Inventor: MA, Haiyan, Shenzhen, Guangdong 518000 (CN)
(74) Representative: Cabinet Beaumont
(86) International application number: PCT/CN2019/096071
(87) International publication number: WO 2020/177261

(56) References cited:
- CN-A- 107 392 359
- CN-A- 107 478 237
- CN-A- 107 478 237
- CN-A- 107 491 925
- CN-A- 107 730 761
- CN-A- 109 285 057
- CN-A- 109 708 646
- CN-U- 207 489 161
- US-A1- 2018 101 810
- NABIN KAFLE ET AL: "Design and modeling of a crowdsource-enabled system for urban parcel relay and delivery", TRANSPORTATION RESEARCH PART B. METHODOLOGICAL., vol. 99, 1 May 2017 (2017-05-01), GB, pages 62 - 82, XP055579299, ISSN: 0191-2615, DOI: 10.1016/j.trb.2016.12.022

## Description

### TECHNICAL FIELD

Embodiments of the present application relate to the technical field of delivery lockers, for example, a method for seeking a delivery locker, a device, and a storage medium.

### BACKGROUND

The express delivery business is showing a rapid growth trend. A courier finds a delivery locker corresponding to a parcel according to express delivery information, then temporarily deposits the parcel in the corresponding delivery locker, and sends delivery information to a user via SMS, etc., providing the user with the 24-hour self-service pickup service. This service mode satisfies the requirements of users to pick up the parcel at any time and thus is welcomed by express companies and users.

In the related art, the courier finds nearby delivery lockers by using map navigation. The map navigation is generally based on satellite positioning navigation.

The disadvantage of the related art is that the navigation accuracy of the map navigation in the "last mile" is relatively low. For example, when the delivery locker is located inside a community, an experienced courier who is familiar with the surroundings generally traverses inside of the community and finds the delivery locker quickly. However, compared with the path chosen by the experienced courier familiar with the surroundings, a path provided by the map navigation does not traverse inside of the community, which leads to a long distance, an increase in the en-route time length for the courier to reach the delivery locker, and low delivery time efficiency.

US 2018/0101810 A1 relates to methods and devices for providing information of a stored object.

CN 109 285 057 A relates to a clothing acquisition method applied to a courier cabinet.

CN 207 489 161 U relates to a guide system for picking up express cabinets.

"Enabling Green Crowdsourced Social Delivery Networks in Urban Communities", XP 055970699, DOI: 10.3390/s22041541, discloses a crowdsource-enabled system for urban parcel relay and delivery.

### SUMMARY

The present invention provides a method for seeking a delivery locker, a device, and a storage medium according to independent claims 1, 8 and 15 respectively. In this manner, a solution for seeking the delivery locker in the related art is optimized, and a more accurate, convenient, and quick method for seeking the delivery locker is provided for a user so that an en-route time length for the user to seek the delivery locker is reduced, the time efficiency of the user reaching the delivery locker is improved, and the user experience is improved.

The present invention is defined by the appended set of claims.

### BRIEF DESCRIPTION OF DRAWINGS

FIG. 1 is a flowchart of a method for seeking a delivery locker according to embodiment one of the present application;
FIG. 2A is a flowchart of a method for seeking a delivery locker according to embodiment two of the present application;
FIG. 2B is a schematic diagram of a management structure of a back-end operating system for an operator according to embodiment two of the present application;
FIG. 2C is a schematic diagram of a user function according to embodiment two of the present application;
FIG. 2D is a flowchart of a method for publishing a track data collection task and navigation according to embodiment two of the present application;
FIG. 3 is a flowchart of a method for seeking a delivery locker according to embodiment three of the present application;
FIG. 4 is a structure diagram of an apparatus for seeking a delivery locker according to embodiment four of the present application; and
FIG. 5 is a structure diagram of a computer device according to embodiment five of the present application.

### DETAILED DESCRIPTION

The present application is further described in detail hereinafter in conjunction with the drawings and embodiments. The embodiments described herein are intended to explain and not to limit the present application. To facilitate description, only part, not all, of structures related to the present application are illustrated in the drawings.

### Embodiment one

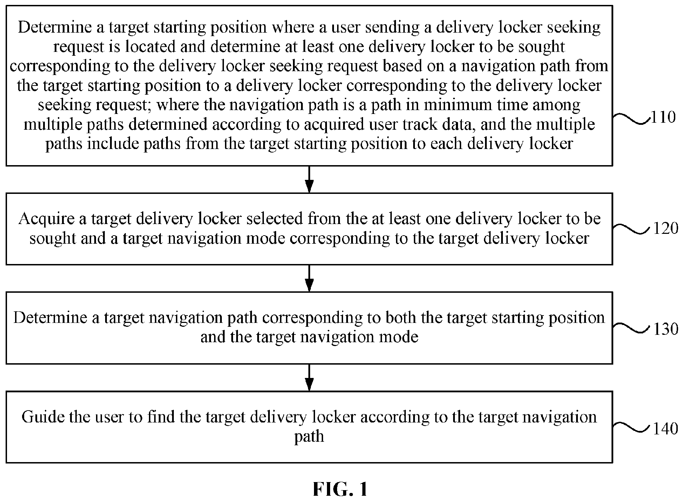

FIG. 1 is a flowchart of a method for seeking a delivery locker according to embodiment one of the present application. This embodiment may be suitable for a case of seeking a delivery locker. The method may be executed by an apparatus for seeking a delivery locker. The apparatus may be implemented by software and/or hardware. The apparatus may be disposed in a computer device such as a server. As shown in FIG. 1, the method includes steps described below.

In step 110, a target starting position where a user sending a delivery locker seeking request is located is determined and at least one delivery locker to be sought corresponding to the delivery locker seeking request is determined based on a navigation path from the target starting position to a delivery locker corresponding to the delivery locker seeking request; where the navigation path is a path in minimum time among multiple paths determined according to acquired user track data, and the multiple paths include paths from the target starting position to each delivery locker.

By sending the delivery locker seeking request, the user requests to find a delivery locker near the current position where the user is located. The user may be a courier or other users who use the delivery locker. Optionally, the user sends the delivery locker seeking request through a mobile terminal.

In an embodiment, the delivery locker corresponding to the delivery locker seeking request may be understood as all delivery lockers whose linear distances from the target starting position where the user sending the delivery locker seeking request is located are less than or equal to a threshold. In an embodiment, the threshold may be set or selected (for example, 500 m, 1 km, 3 km, etc.) according to delivery lockers and the population density of a divided region to which the target starting position belongs.

Navigation paths respectively corresponding to multiple delivery lockers are predetermined according to the acquired user track data. The user track data may include movement tracks, walking data, or cycling data provided by couriers or other users who use the delivery lockers. The navigation path is determined according to the user track data and is a path in minimum time from a designated position to the delivery locker.

Optionally, the navigation path may include a walking navigation path and a cycling navigation path. The walking navigation path is a path in minimum time to walk from a designated position to the delivery locker. The cycling navigation path is a path in minimum time to cycle from a designated position to the delivery locker.

In an example, at least one track data collection task corresponding to each delivery locker is published. The track data collection task includes a task starting position, a task ending position, and a task rule. The task starting position may be a geographic position of a certain express outlet, and the geographic position may be latitude and longitude. The task starting position may also be a specific geographic position within a certain community, for example, the geographic position at an entrance of a certain building. The task ending position is the geographic position of the corresponding delivery locker. The task rule is walking or cycling. User track data of at least two users participating in the at least one track data collection task is acquired; the user track data is corrected according to a preset rule; and a navigation path between the task starting position and the task ending position is determined according to the corrected user track data, that is, the path in minimum time to walk from the task starting position to the delivery locker and the path in minimum time to cycle from the task starting position to the delivery locker are determined. The task starting position is set as the starting position of the navigation path. The geographic position of the delivery locker is set as the ending position of the navigation path.

At least one delivery locker to be sought is determined among all delivery lockers according to the navigation path corresponding to each delivery locker. In an example, a distance between the target starting position of the delivery locker seeking request and the geographic position of each delivery locker is determined according to the navigation path corresponding to each delivery locker. Then, according to the distance and a preset distance threshold, at least one delivery locker to be sought is determined among all delivery lockers. The target starting position is the geographic position where the user sending the delivery locker seeking request is located. That is, at least one delivery locker to be sought corresponding to the delivery locker seeking request is determined based on the navigation path from the target starting position to the delivery locker corresponding to the delivery locker seeking request.

The preset distance threshold may be set as needed. For example, the preset distance threshold is 1 km. The distance between the target starting position of the delivery locker seeking request and the geographic position of each delivery locker is calculated according to navigation paths corresponding to multiple delivery lockers. Then, according to the distance and the preset distance threshold, the delivery locker whose distance is less than 1 km among all the delivery lockers is acquired and determined as the delivery locker to be sought.

In step 120, a target delivery locker selected from the at least one delivery locker to be sought and a target navigation mode corresponding to the target delivery locker are acquired.

In an example, the at least one delivery locker to be sought and a distance between the target starting position of the delivery locker seeking request and the at least one delivery locker to be sought are provided for the user matching the delivery locker seeking request. For example, three delivery lockers to be sought exist, including No. 1 delivery locker to be sought, No. 2 delivery locker to be sought, and No. 3 delivery locker to be sought. The distance between the target starting position and No. 1 delivery locker to be sought is 200 meters. The distance between the target starting position and No. 2 delivery locker to be sought is 550 meters. The distance between the target starting position and No. 3 delivery locker to be sought is 950 meters. The above information is provided for the user matching the delivery locker seeking request. Then, one target delivery locker fed back by the user based on the at least one delivery locker to be sought is acquired. That is, the user may select one of the preceding delivery lockers to be sought as the target delivery locker. All navigation modes are provided for the user. Optionally, the navigation modes include walking navigation and cycling navigation. The target navigation mode fed back by the user based on all the navigation modes is acquired. That is, the user may select one navigation mode from the preceding navigation modes.

In step 130, a target navigation path corresponding to both the target starting position and the target navigation mode is determined.

If the target navigation mode selected by the user is walking navigation, a walking navigation path whose starting position is the target starting position is acquired from all walking navigation paths corresponding to the target delivery locker and determined as the target navigation path.

If the target navigation mode selected by the user is cycling navigation, a cycling navigation path whose starting position is the target starting position is acquired from all cycling navigation paths corresponding to the target delivery locker and determined as the target navigation path.

In step 140, the user is guided to find the target delivery locker according to the target navigation path.

A distance between the user and the target delivery locker and movement direction prompt information are calculated according to the target navigation path so that the user is guided to find the target delivery locker. The movement direction prompt information is configured to prompt the user to proceed in the prompting direction at a current moment.

In an embodiment, the distance and movement direction prompt information of the target delivery locker relative to the user may be continuously updated according to a preset time interval and the target navigation path, so as to guide the user to follow the target navigation path to the geographic position of the target delivery locker and find the target delivery locker.

The embodiments of the present application provide a method for seeking a delivery locker. A target starting position where a user sending a delivery locker seeking request is located is determined and at least one delivery locker to be sought corresponding to the delivery locker seeking request is determined based on a navigation path from the target starting position to a delivery locker corresponding to the delivery locker seeking request; where the navigation path is a path in minimum time among multiple paths determined according to acquired user track data, and the multiple paths include paths from the target starting position to each delivery locker. A target delivery locker selected from the at least one delivery locker to be sought and a target navigation mode corresponding to the target delivery locker are acquired. A target navigation path corresponding to both the target starting position and the target navigation mode is determined according to the target starting position of the delivery locker seeking request and the target navigation mode. The user is guided to find the target delivery locker according to the target navigation path. In this manner, the following problem in the related art is solved, the navigation accuracy of the map navigation in the "last mile" is relatively low, which leads to a long distance of the provided path, an increase in the en-route time length for the courier to reach the delivery locker, and low delivery time efficiency. In the embodiments of the present application, path planning and navigation can be performed according to actual user track data, which is more suitable for navigation inside the community or indoors. Therefore, the navigation accuracy in the "last mile" can be effectively improved, and a more accurate, convenient, and quick method for seeking a delivery locker is provided for the user, which is conducive to reducing the en-route time length of the path, improving the time efficiency of the user reaching the delivery locker, and improving the user experience.

### Embodiment two

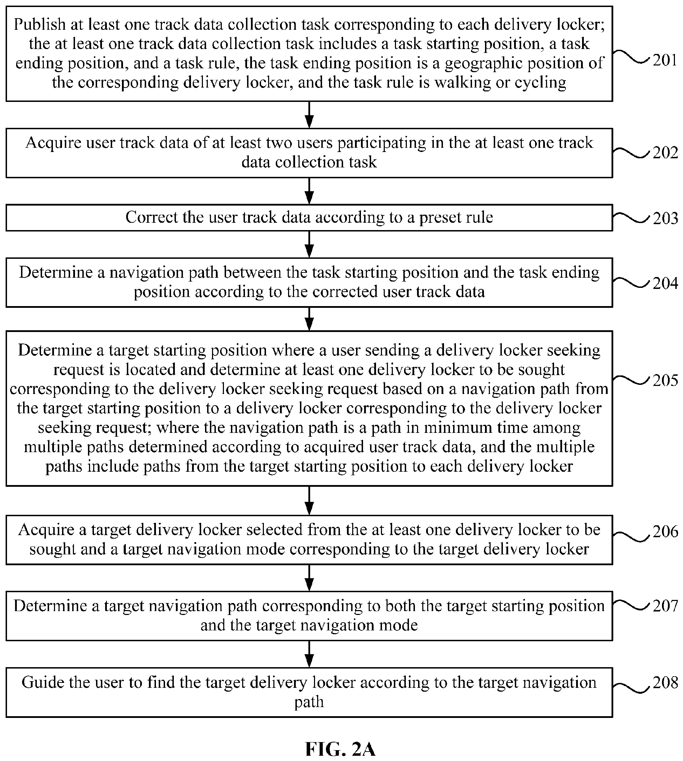

FIG. 2A is a flowchart of a method for seeking a delivery locker according to embodiment two of the present application. This embodiment may be combined with optional solutions in one or more of the preceding embodiments. In this embodiment, before the target starting position where the user sending the delivery locker seeking request is located is determined and the at least one delivery locker to be sought corresponding to the delivery locker seeking request is determined based on the navigation path from the target starting position to the delivery locker corresponding to the delivery locker seeking request, the method further includes publishing at least one track data collection task corresponding to each delivery locker; where the at least one track data collection task includes a task starting position, a task ending position, and a task rule, the task ending position is a geographic position of the corresponding delivery locker, and the task rule is walking or cycling; acquiring user track data of at least two users participating in the at least one track data collection task; correcting the user track data according to a preset rule; and determining a navigation path between the task starting position and the task ending position according to the corrected user track data.

As shown in FIG. 2A, the method includes steps described below.

In step 201, at least one track data collection task corresponding to each delivery locker is published. The at least one track data collection task includes a task starting position, a task ending position, and a task rule, the task ending position is a geographic position of the corresponding delivery locker, and the task rule is walking or cycling.

The users participating in the at least one track data collection task move from the task starting position to the task ending position according to the task rule. If the task rule of the track data collection task is walking, the users walk from the task starting position to the task ending position according to the task rule. If the task rule of the track data collection task is cycling, the users cycle from the task starting position to the task ending position according to the task rule.

The task starting position may be a geographic position of a certain express outlet. The task starting position may also be a specific geographic position within a certain community, for example, the geographic position at an entrance of a certain building. The task ending position is the geographic position of a corresponding delivery locker.

In step 202, user track data of at least two users participating in the at least one track data collection task is acquired.

For each track data collection task, user track data of multiple users participating in the track data collection task may be acquired.

In an example, the task rule is walking. The user track data includes a starting point check-in time, an ending point check-in time, a movement track, and a walking distance.

The step of acquiring the user track data of the at least two users participating in the at least one track data collection task may include after acquiring a task starting request of a user of the at least two users participating in the at least one track data collection task, detecting whether a current position of the user matches the task starting position. Optionally, the user acquires notification information of the track data collection task through a mobile terminal and sends the task starting request through the mobile terminal. If the current position of the user matches the task starting position, the current time is recorded as the starting point check-in time, and a collection of a real-time movement track and a real-time walking distance of the user is started.

If the current position of the user does not match the task starting position, prompt information is sent to prompt the user to move to the task starting position. After moving to the task starting position, the user may resend the task starting request. If the current position of the user matches the task starting position, the current time is recorded as the starting point check-in time, and a collection of a real-time movement track and a real-time walking distance of the user is started.

Then, the user starts to walk from the task starting position to the task ending position. Optionally, the track data collection task further includes marking special information. The marking special information means that the user marks corresponding special information according to some special cases encountered during the process of moving from the task starting position to the task ending position. For example, the user starts to walk from the task starting position to the task ending position, and when passing a certain intersection, the user finds a dog. In response to this case, the user may mark the corresponding special information, and the special information is "there is a dog at a certain intersection".

After reaching the task ending position, the user sends a task ending request through the mobile terminal. After a task ending request of the user participating in the at least one track data collection task is acquired, whether a current position of the user matches the task ending position is detected. If the current position of the user matches the task ending position, current time is recorded as the ending point check-in time, collection of the real-time movement track and the real-time walking distance is stopped, and the movement track and the walking distance of the user in the at least one track data collection task are determined. The walking distance is the number of steps of the user.

If the current position of the user does not match the task ending position, prompt information is sent to prompt the user to move to the task ending position. After moving to the task ending position, the user may resend the task ending request. If the current position of the user matches the task ending position, the current time is recorded as the ending point check-in time, collection of the real-time movement track and the real-time walking distance is stopped, and the movement track and the walking distance of the user in the at least one track data collection task are determined.

In another example, the task rule is cycling. The user track data includes a starting point check-in time, an ending point check-in time, a movement track, and a cycling time.

The step of acquiring the user track data of the at least two users participating in the at least one track data collection task may include after acquiring a task starting request of a user of the at least two users participating in the at least one track data collection task, detecting whether a current position of the user matches the task starting position. If the current position of the user matches the task starting position, the current time is recorded as the starting point check-in time, timing begins from the starting point check-in time, and collection of a real-time movement track of the user is started. If the current position of the user does not match the task starting position, prompt information is sent to prompt the user to move to the task starting position.

Then, the user starts to cycle from the task starting position to the task ending position, and after reaching the task ending position, a task ending request is sent through the mobile terminal. After the task ending request of the user participating in the at least one track data collection task is acquired, whether a current position of the user matches the task ending position is detected. If the current position of the user matches the task ending position, the current time is recorded as the ending point check-in time, timing and collection of the real-time movement track are stopped, and the movement track and the cycling time of the user in the at least one track data collection task are determined. The timing time is the cycling time.

In step 203, the user track data is corrected according to a preset rule.

For each track data collection task, the user track data is corrected according to the preset rule and unreasonable user track data is masked. For example, the preset rule may be correcting the user track data according to the movement track. Whether the user detours to other positions during the process of participating in the track data collection task is determined according to the movement track. If the user detours to other positions during the process of participating in the track data collection task, the user track data is determined as unreasonable data and then deleted; and if the user does not detour to other positions during the process of participating in the track data collection task, the user track data is determined as reasonable data and then retained.

In step 204, a navigation path between the task starting position and the task ending position is determined according to the corrected user track data.

For each track data collection task, the time corresponding to the corrected track data of each user is calculated. A movement track of the user track data with the minimum time is determined as the navigation path between the task starting position and the task ending position.

In step 205, a target starting position where a user sending a delivery locker seeking request is located is determined and at least one delivery locker to be sought corresponding to the delivery locker seeking request is determined based on a navigation path from the target starting position to a delivery locker corresponding to the delivery locker seeking request; where the navigation path is a path in minimum time among multiple paths determined according to acquired user track data, and the multiple paths include paths from the target starting position to each delivery locker.

In step 206, a target delivery locker selected from the at least one delivery locker to be sought and a target navigation mode corresponding to the target delivery locker are acquired.

In step 207, a target navigation path corresponding to both the target starting position and the target navigation mode is determined.

In step 208, the user is guided to find the target delivery locker according to the target navigation path.

The distance and movement direction prompt information of the target delivery locker relative to the user may be continuously updated according to a preset time interval and the target navigation path, so as to guide the user to follow the target navigation path to the geographic position of the target delivery locker and find the target delivery locker. Optionally, if the target navigation path has corresponding special information, the user is prompted by voice prompt information. For example, the special information is "there is a dog at a certain intersection"; before the user reaches the certain intersection, the voice prompt information "there is a dog at a certain intersection" is output.

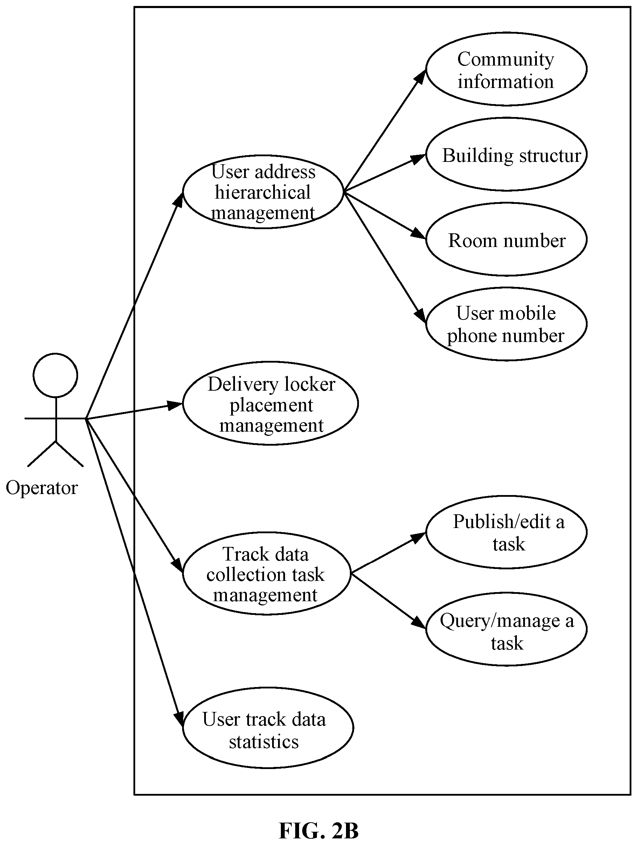

In an example, the track data collection task may be managed through a back-end operating system for an operator. FIG. 2B is a schematic diagram of a management structure of a back-end operating system for an operator according to embodiment two of the present application. As shown in FIG. 2B, the operator may perform user address hierarchical management, delivery locker placement management, track data collection task management, and user track data statistics through the back-end operating system for the operator.

The user address hierarchical management may be performed through the back-end operating system for the operator. An address hierarchy is created through the back-end operating system for the operator. The first level is the country, the second level is the province, the third level is the city, the fourth level is the district, the fifth level is the street, the sixth level is the road, the seventh level is the community (type of place), the eighth level is the building, the ninth level is the room number, and the tenth level is the user (name and mobile phone number). The ten-level address management is performed on the user pickup addresses according to the address levels configured through the back-end operating system for the operator. The user pickup addresses may be classified as the community information, the building structure, the room number, and the user mobile phone number.

The delivery locker placement management may be performed through the back-end operating system for the operator. The hierarchy addresses are matched according to the administrative district and detailed address where the delivery locker is placed, and the delivery locker is assigned to the corresponding building according to the principle of proximity (one delivery locker may correspond to multiple buildings and are associated with corresponding room numbers). The placement locations of corresponding delivery lockers are managed according to the hierarchy. The hierarchy includes the country, province, city, district, street, road, community (type of place), detailed delivery address, and radiated building (associated room numbers and households).

The track data collection task management may be performed through the back-end operating system for the operator. The track data collection task management includes publishing/editing a task. In an embodiment, the step of editing the track data collection task may include adding a task name of the track data collection task, selecting an effective time and an expiration time of the task, specifying a community (type of place) covered by the task and a matched range of delivery lockers (setting the task starting position), selecting couriers of a logistics company that matches the range of delivery lockers, setting the task rule (filling in the content of the rule), selecting a reward method (coupons, points, cash, etc.) and reward content (amount or points), and so on. After the track data collection task is edited, the edited track data collection task may be published. Then, the published track data collection task may be queried and managed through the back-end operating system for the operator. For example, the task name, the effective time of the task, the task status, the community covered by the task, the matched range of delivery lockers, the number of couriers of the logistics company, the task rule (walking, cycling, adding a special mark to the path, etc.), setting the reward method and reward content, and so on are queried and reedited.

The user track data statistics may be performed through the back-end operating system for the operator. The user track data is acquired for statistics, and the following records corresponding to the user track data are obtained: the task code, the task name, the participant name/mobile phone number, the subordinate express company, the starting point check-in time, the ending point check-in time, the movement track, the cycling time or walking distance (the number of steps: data reported by a pedometer), whether the data is valid, the reward method, the reward time, the reward content, etc. The user track data after statistics may be queried according to the task name, the status, the effective time of the task, the range of delivery lockers, etc.

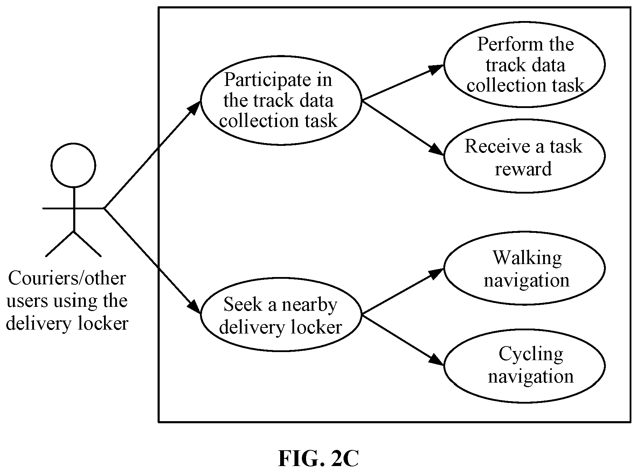

FIG. 2C is a schematic diagram of a user function according to embodiment two of the present application. As shown in FIG. 2C, the user function includes participating in the track data collection task and finding a nearby delivery locker. The couriers or other users who use the delivery locker may participate in the track data collection task. After the task is completed, the task reward is received according to the completion of the task. The couriers or other users who use the delivery locker may also use the method in the embodiments of the present application to find the nearby delivery locker. Walking navigation or cycling navigation may be chosen.

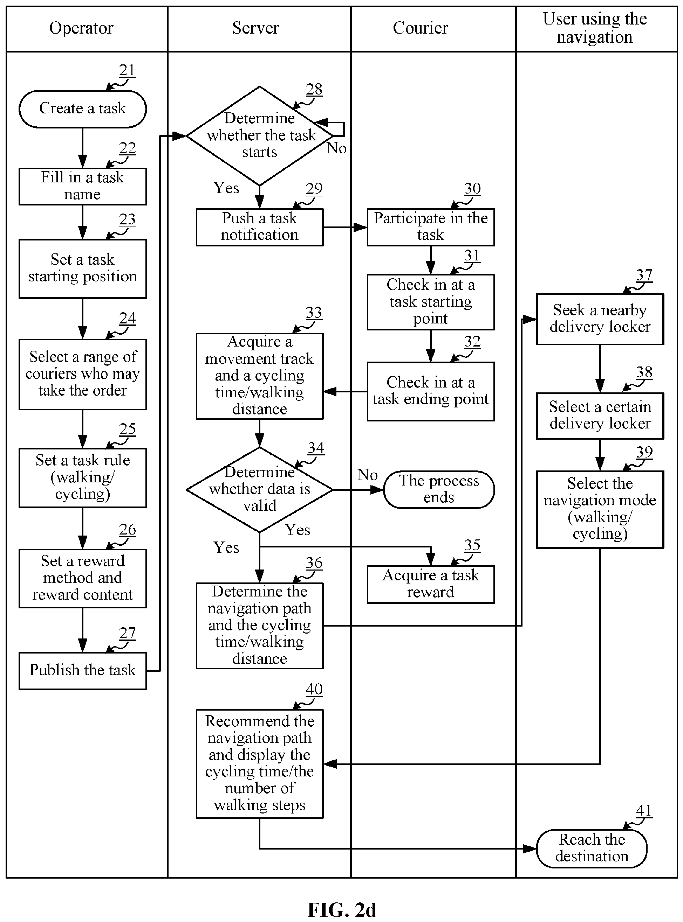

FIG. 2D is a flowchart of a method for publishing a track data collection task and navigation according to embodiment two of the present application. The method includes steps described below.

In step 21, an operator creates a task.

A track data collection task is created.

In step 22, the operator fills in a task name.

In step 23, the operator sets a task starting position.

In step 24, the operator selects a range of couriers who may take the order.

In step 25, the operator sets the task rule (walking/cycling).

The task rule is walking or cycling.

In step 26, the operator sets a reward method and reward content.

The reward method may be coupons, points, cash, etc. The reward content may be amount, points, etc.

In step 27, the operator publishes the task.

In step 28, a server determines whether the task starts; if the task is started, step 29 is executed; and if the task does not start, whether the task starts is determined continuously.

In step 29, the server pushes a task notification.

In step 30, a courier participates in the task.

In step 31, the courier checks in at a task starting point.

In step 32, the courier checks in at a task ending point.

In step 33, the server acquires the movement track and the cycling time/walking distance.

In step 34, the server determines whether data is valid. If the server determines that the data is valid, steps 35 and 36 are executed, and if the server determines that the data is invalid, subsequent steps are not executed.

The server determines whether the acquired data by determining whether the movement track and the cycling time/walking distance are valid. That is, whether the data is reasonable is determined.

In step 35, the courier acquires the task reward.

In step 36, the server determines the navigation path and the cycling time/walking distance.

In step 37, a user using the navigation seeks a nearby delivery locker.

In step 38, the user using the navigation selects a certain delivery locker.

In step 39, the user using the navigation selects a navigation mode (walking/cycling).

In step 40, the server recommends the navigation path and displays the cycling time/the number of walking steps.

The server recommends the navigation path corresponding to the certain delivery locker selected by the user using the navigation, displays the cycling time or the number of walking steps, and guides the user to find the delivery locker according to the navigation path.

In step 41, the user using the navigation reaches the destination.

The user using the navigation reaches the destination, that is, the user reaches the geographic position where the delivery locker is located.

The embodiments of the present application provide a method for seeking a delivery locker. At least one track data collection task corresponding to multiple delivery lockers is published; where the at least one track data collection task includes a task starting position, a task ending position, and a task rule, the task ending position is a geographic position of the corresponding delivery locker, and the task rule is walking or cycling; user track data of at least two users participating in the at least one track data collection task is acquired; after the user track data is corrected according to a preset rule, a navigation path between the task starting position and the task ending position is determined according to the corrected user track data. In this manner, the track data collection task is published, and the user track data from a certain starting point to the delivery locker is acquired for path planning and navigation; compared with the ordinary satellite positioning, the user track data is provided by experienced couriers or nearby residents, which is more suitable for navigation inside the community or indoors. Therefore, the navigation accuracy in the "last mile" can be effectively improved, which is conducive to reducing the en-route time length of the path, improving the time efficiency for reaching the delivery locker, and improving the user experience.

### Embodiment three

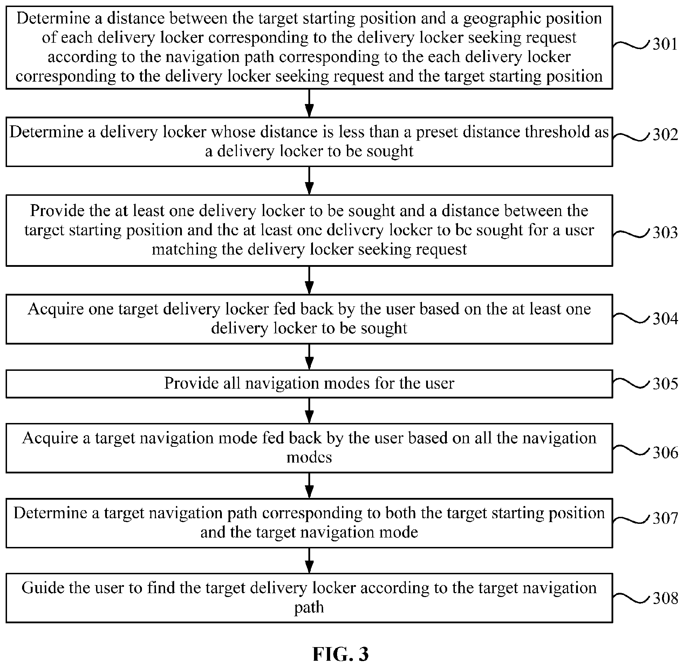

FIG. 3 is a flowchart of a method for seeking a delivery locker according to embodiment three of the present application. This embodiment may be combined with optional solutions in one or more of the preceding embodiments. In this embodiment, the step of determining the at least one delivery locker to be sought corresponding to the delivery locker seeking request based on the navigation path from the target starting position to the delivery locker corresponding to the delivery locker seeking request includes determining a distance between the target starting position and a geographic position of each delivery locker corresponding to the delivery locker seeking request according to the navigation path corresponding to the each delivery locker corresponding to the delivery locker seeking request and the target starting position; and determining a delivery locker whose distance is less than a preset distance threshold as a delivery locker to be sought.

In addition, the step of acquiring the target delivery locker selected from the at least one delivery locker to be sought and the target navigation mode corresponding to the target delivery locker includes providing the at least one delivery locker to be sought and a distance between the target starting position of the delivery locker seeking request and the at least one delivery locker to be sought for the user matching the delivery locker seeking request; acquiring one target delivery locker fed back by the user based on the at least one delivery locker to be sought; providing all navigation modes for the user; and acquiring the target navigation mode fed back by the user based on all the navigation modes.

As shown in FIG. 3, the method includes steps described below.

In step 301, a distance between the target starting position and a geographic position of each delivery locker corresponding to the delivery locker seeking request is determined according to the navigation path corresponding to the each delivery locker corresponding to the delivery locker seeking request and the target starting position. The distance between the target starting position of the delivery locker seeking request and the geographic position of each delivery locker is calculated according to the navigation path corresponding to the each delivery locker.

In step 302, a delivery locker whose distance is less than a preset distance threshold is determined as a delivery locker to be sought.

The preset distance threshold may be set as needed. For example, the preset distance threshold is 1 km. The distance between the target starting position of the delivery locker seeking request and the geographic position of each delivery locker in multiple delivery lockers is calculated according to navigation paths corresponding to the multiple delivery lockers. Then, according to the distance and the preset distance threshold, the delivery locker whose distance is less than 1 km among all delivery lockers is acquired and determined as the delivery locker to be sought.

In step 303, the at least one delivery locker to be sought and a distance between the target starting position and the at least one delivery locker to be sought are provided for the user matching the delivery locker seeking request.

Each delivery locker to be sought and the distance between the target starting position of the delivery locker seeking request and each delivery locker to be sought are provided for the user matching the delivery locker seeking request. For example, three delivery lockers to be sought exist, including No. 1 delivery locker to be sought, No. 2 delivery locker to be sought, and No. 3 delivery locker to be sought. The distance between the target starting position and No. 1 delivery locker to be sought is 200 meters. The distance between the target starting position and No. 2 delivery locker to be sought is 550 meters. The distance between the target starting position and No. 3 delivery locker to be sought is 950 meters. The above information is provided for the user matching the delivery locker seeking request.

In step 304, one target delivery locker fed back by the user based on the at least one delivery locker to be sought is acquired.

The user may select one from the delivery lockers to be sought as the target delivery locker.

In step 305, all navigation modes are provided for the user.

Optionally, the navigation modes include walking navigation and cycling navigation.

In step 306, a target navigation mode fed back by the user based on all navigation modes is acquired.

That is, the user may select one navigation mode from all the navigation modes.

In step 307, a target navigation path corresponding to both the target starting position and the target navigation mode is determined.

In step 308, the user is guided to find the target delivery locker according to the target navigation path.

The embodiments of the present application provide a method for seeking a delivery locker. A distance between the target starting position of the delivery locker seeking request and a geographic position of each delivery locker is determined according to the navigation path corresponding to the each delivery locker; at least one delivery locker to be sought is determined among all the delivery lockers according to the distance and a preset distance threshold; the at least one delivery locker to be sought, the distance between the target starting position of the delivery locker seeking request and the at least one delivery locker to be sought, and all navigation modes are provided for the user matching the delivery locker seeking request; the target delivery locker fed back by the user and the target navigation mode are acquired. **In** this manner, distances between a position where the user is located and geographic positions of multiple delivery lockers may be calculated according to the navigation paths determined by acquired user track data; the delivery lockers near the user may be provided according to the obtained distances; information related to the nearby delivery lockers may be provided for the user, and the user independently selects the delivery locker to be sought and the navigation mode, improving the user experience.

### Embodiment four

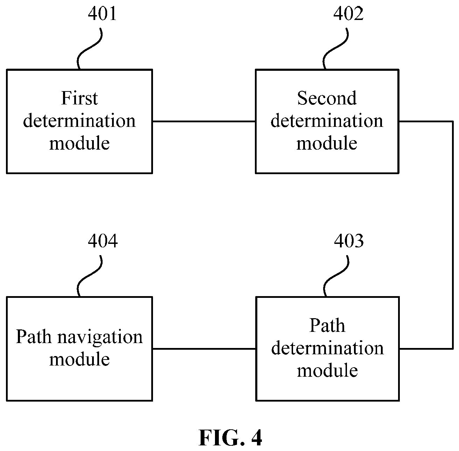

FIG. 4 is a structure diagram of an apparatus for seeking a delivery locker according to embodiment four of the present application. The apparatus may be disposed in a computer device such as a server. As shown in FIG. 4, the apparatus includes a first determination module 401, a second determination module 402, a path determination module 403, and a path navigation module 404.

The first determination module 401 is configured to determine a target starting position where a user sending a delivery locker seeking request is located and determine at least one delivery locker to be sought corresponding to the delivery locker seeking request based on a navigation path from the target starting position to a delivery locker corresponding to the delivery locker seeking request; where the navigation path is a path in minimum time among multiple paths determined according to acquired user track data, and the multiple paths include paths from the target starting position to each delivery locker. The second determination module 402 is configured to acquire a target delivery locker selected from the at least one delivery locker to be sought and a target navigation mode corresponding to the target delivery locker. The path determination module 403 is configured to determine a target navigation path corresponding to both the target starting position and the target navigation mode. The path navigation module 404 is configured to guide the user to find the target delivery locker according to the target navigation path.

The embodiments of the present application provide an apparatus for seeking a delivery locker. At least one delivery locker to be sought is determined among all delivery lockers according to navigation paths corresponding to multiple delivery lockers; and the navigation paths are determined according to acquired user track data; then one target delivery locker is determined among the at least one delivery locker to be sought, and a target navigation mode corresponding to the target delivery locker is determined; a target navigation path is determined among all navigation paths corresponding to the target delivery locker according to the target starting position of the delivery locker seeking request and the target navigation mode; the user is guided to find the target delivery locker according to the target navigation path. In this manner, the following problem in the related art is solved, the navigation accuracy of the map navigation in the "last mile" is relatively low, which leads to a long distance of the provided path, an increase in the en-route time length for the courier to reach the delivery locker, and low delivery time efficiency. In the embodiments of the present application, path planning and navigation can be performed according to actual user track data, which is more suitable for navigation inside the community or indoors. Therefore, the navigation accuracy in the "last mile" can be effectively improved, and a more accurate, convenient, and quick method for seeking a delivery locker is provided for the user, which is conducive to reducing the en-route time length of the path, improving the time efficiency of the user reaching the delivery locker, and improving the user experience.

Based on the preceding one or more embodiments, the apparatus further includes a task publishing module, a data acquisition module, a data correction module and a path determination module. The task publishing module is configured to publish at least one track data collection task corresponding to each delivery locker; where the at least one track data collection task includes a task starting position, a task ending position and a task rule, the task ending position is a geographic position of the corresponding delivery locker, and the task rule is walking or cycling; the data acquisition module is configured to acquire user track data of at least two users participating in the at least one track data collection task; the data correction module is configured to correct the user track data according to a preset rule; and the path determination module is configured to determine a navigation path between the task starting position and the task ending position according to the corrected user track data.

Based on the preceding one or more embodiments, the task rule is walking; the user track data includes a starting point check-in time, an ending point check-in time, a movement track, and a walking distance; the data acquisition module may include a first position matching unit, a first acquisition unit, a second position matching unit, and a first determination unit. The first position matching unit is configured to, after a task starting request of a user of the at least two users participating in the at least one track data collection task is acquired, detect whether a current position of the user matches the task starting position; the first acquisition unit is configured to record current time as the starting point check-in time and start to collect a real-time movement track and a real-time walking distance of the user if the current position of the user matches the task starting position; the second position matching unit is configured to detect whether a current position of the user matches the task ending position after a task ending request of the user participating in the at least one track data collection task is acquired; and the first determination unit is configured to record current time as the ending point check-in time, stop collecting the real-time movement track and the real-time walking distance, and determine the movement track and the walking distance of the user in the at least one track data collection task, if the current position of the user matches the task ending position.

Based on the preceding one or more embodiments, the task rule is cycling; the user track data includes a starting point check-in time, an ending point check-in time, a movement track, and a cycling time; the data acquisition module may include a third position matching unit, a second acquisition unit, a fourth position matching unit, and the second determination unit. The third position matching unit is configured to detect whether a current position of the user matches the task starting position after a task starting request of a user of the at least two users participating in the at least one track data collection task is acquired; the second acquisition unit is configured to start timing from the starting point check-in time, and start to collect a real-time movement track of the user if the current position of the user matches the task starting position, record current time as the starting point check-in time; the fourth position matching unit, which is configured to detect whether a current position of the user matches the task ending position after a task ending request of the user participating in the at least one track data collection task is acquired; and the second determination unit is configured to record current time as the ending point check-in time, stop the timing and collecting the real-time movement track, and determine the movement track and the cycling time of the user in the at least one track data collection task, if the current position of the user matches the task ending position.

Based on the preceding one or more embodiments, the first determination module 401 may include a distance determination unit and a delivery locker determination unit, the distance determination unit is configured to determine a distance between the target starting position and a geographic position of each delivery locker corresponding to the preceding delivery locker seeking request according to the navigation path corresponding to the each delivery locker corresponding to the preceding delivery locker seeking request and the target starting position; and the delivery locker determination unit is configured to determine a delivery locker whose distance is less than a preset distance threshold as a delivery locker to be sought.

Based on the preceding one or more embodiments, the second determination module 402 may include a delivery locker providing unit, a delivery locker acquisition unit, a navigation mode providing unit, and a navigation mode acquisition unit. The delivery locker providing unit is configured to provide the at least one delivery locker to be sought and a distance between the target starting position of the delivery locker seeking request and the at least one delivery locker to be sought for the user matching the delivery locker seeking request; the delivery locker acquisition unit is configured to acquire one target delivery locker fed back by the user based on the at least one delivery locker to be sought; the navigation mode providing unit is configured to provide all navigation modes for the user; and the navigation mode acquisition unit is configured to acquire the target navigation mode fed back by the user based on all the navigation modes.

Based on the preceding one or more embodiments, the target navigation mode is walking navigation or cycling navigation.

The apparatus for seeking a delivery locker provided in the embodiment of the present application may execute the method for seeking a delivery locker provided in the embodiments of the present application and has functional modules and beneficial effects corresponding to the executed method.

### Embodiment five

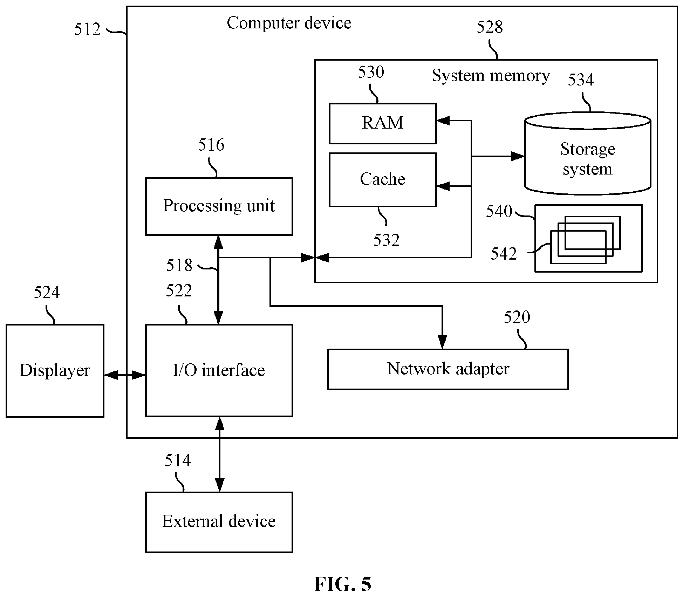

FIG. 5 is a structure diagram of a computer device according to embodiment five of the present disclosure. FIG. 5 is a block diagram of an exemplary computer device 512 for implementing embodiments of the present disclosure. The computer device 512 shown in FIG. 5 is merely an example and not intended to limit the function and use scope of the embodiments of the present disclosure.

As shown in FIG. 5, the computer device 512 may take the form of a general-purpose computer device. Components of the computer device 512 may include one or more processors or processing units 516, a system memory 528, and a bus 518 connecting different system components (including the system memory 528 and the one or more processing units 516).

The bus 518 represents one or more of several types of bus architectures, including a memory bus or memory controller, a peripheral bus, an accelerated graphics port, and a processor, or represents a local bus using any one of multiple bus architectures. For example, these architectures include, and are not limited to, an industry standard architecture (ISA) bus, a microchannel architecture (MAC) bus, an enhanced ISA bus, a video electronics standards association (VESA) local bus, and a peripheral component interconnect (PCI) bus.

The computer device 512 includes multiple computer system readable media. These media may be available media that can be accessed by the computer device 512 and include volatile and non-volatile media, and removable and non-removable media.

The system memory 528 may include computer system readable media in the form of a volatile memory such as at least one of a random-access memory (RAM) 530 and a cache 532. The computer device 512 may include other removable/non-removable and volatile/non-volatile computer system storage media. By way of example only, a storage system 534 may be configured to read from and write to non-removable and non-volatile magnetic media (not shown in FIG. 5, commonly referred to as a "hard disk drive"). Although not shown in FIG. 5, it is feasible to provide not only a magnetic disk driver for performing reading and writing on a removable non-volatile magnetic disk (for example, a "floppy disk"), but also an optical disk driver for performing reading and writing on a removable non-volatile optical disk such as a compact disc read-only memory (CD-ROM), a digital video disc-read only memory (DVD-ROM) or other optical media. In these cases, each driver may be connected to the bus 518 via one or more data media interfaces. The system memory 528 may include at least one program product having a group of program modules (for example, at least one program module). These program modules are configured to perform functions of each embodiment of the present disclosure.

A program/utility 540 having a group (at least one) of program modules 542 may be stored, for example, in the system memory 528, the group of program modules 542 include, and not limited to, an operating system, one or more applications, other program modules, and program data. Each or some combination of the examples may include an implementation of a network environment. Each program module 542 generally performs at least one of functions and methods in the embodiments described in the present disclosure.

The computer device 512 may also communicate with at least one external device 514 (for example, a keyboard, a pointing terminal, a displayer 524, etc.). The computer device 512 may also communicate with at least one device that enables a user to interact with the computer device 512 and communicate with at least one of any device (for example, a network card, a modem, etc.) that enables the computer device 512 to communicate with at least one of other computing devices. Such communication may be performed through an input/output (I/O) interface 522. In addition, the computer device 512 may communicate with one or more networks (for example, at least one of a local area network (LAN), a wide area network (WAN), and a public network such as the Internet) through a network adapter 520. As shown in the figure, the network adapter 520 communicates with other modules of the computer device 512 via the bus 518. It is to be understood that although not shown in FIG. 5, at least one of other hardware and/or software modules may be used in conjunction with the computer device 512. The other hardware and/or software modules include, and are not limited to, microcode, a terminal driver, a redundant processing unit, an external disk drive array, redundant arrays of independent disks (RAID) system, a tape driver, and a data backup storage system.

The processing unit 516 performs various functional applications and data processing via executing the program stored in the system memory 528, for example, implementing the method for seeking a delivery locker provided in the embodiments of the present disclosure. The method includes determining a target starting position where a user sending a delivery locker seeking request is located and determining at least one delivery locker to be sought corresponding to the delivery locker seeking request based on a navigation path from the target starting position to a delivery locker corresponding to the delivery locker seeking request; where the navigation path is a path in minimum time among multiple paths determined according to acquired user track data, and the multiple paths include paths from the target starting position to each delivery locker; acquiring a target delivery locker selected from the at least one delivery locker to be sought and a target navigation mode corresponding to the target delivery locker; determining a target navigation path corresponding to both the target starting position and the target navigation mode; and guiding the user to find the target delivery locker according to the target navigation path.

### Embodiment six

Embodiment six of the present application further provides a computer-readable storage medium storing a computer program, where the computer program is configured to, when executed by a processor, perform the method for seeking a delivery locker provided in the embodiments of the present application. The method includes determining a target starting position where a user sending a delivery locker seeking request is located and determining at least one delivery locker to be sought corresponding to the delivery locker seeking request based on a navigation path from the target starting position to a delivery locker corresponding to the delivery locker seeking request; where the navigation path is a path in minimum time among multiple paths determined according to acquired user track data, and the multiple paths include paths from the target starting position to each delivery locker; acquiring a target delivery locker selected from the at least one delivery locker to be sought and a target navigation mode corresponding to the target delivery locker; determining a target navigation path corresponding to both the target starting position and the target navigation mode; and guiding the user to find the target delivery locker according to the target navigation path.

The computer storage medium in the embodiment of the present application may use any combination of one or more computer-readable media. The computer-readable media may be computer-readable signal media or computer-readable storage media. The computer-readable storage medium may be, and not limited to, an electrical, magnetic, optical, electromagnetic, infrared, or semiconductor system, apparatus, or device, or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM) or flash memory, an optical fiber, a compact disc read-only memory (CD-ROM), an optical memory device, a magnetic memory device, or any suitable combination thereof. In this document, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. This propagated data signal may take various forms including an electromagnetic signal, an optical signal, or a suitable combination thereof. The computer-readable signal medium may also be any computer-readable medium that is not a computer-readable storage medium and that can send, propagate, or transmit a program used by or used in conjunction with an instruction execution system, apparatus, or device.

The program codes included on the computer-readable medium may be transmitted on any suitable medium including, and not limited to, a wireless medium, a wired medium, an optical cable, radio frequency (RF), and the like, or a suitable combination thereof.

Computer program codes for performing the operations of the present application may be written in one or more programming languages or a combination thereof, the programming languages including object-oriented programming languages such as Java, Smalltalk, C++, Ruby, Go and further including conventional procedural programming languages such as C programming language or similar programming languages. The program codes may be executed entirely on a user computer, partly on the user computer, as a stand-alone software package, partly on the user computer and partly on a remote computer, or entirely on the remote computer or a server. **In** the scenario involving the remote computer, the remote computer may be connected to the user computer through any type of network, including a local area network (LAN) or a wide area network (WAN), or the connection may be made to an external computer (for example, through the Internet using an Internet service provider).

## Claims

1. A method for seeking a delivery locker, comprising:
determining (110; 205) a target starting position where a user sending a delivery locker seeking request is located and determining among all delivery lockers at least one delivery locker to be sought corresponding to the delivery locker seeking request based on a navigation path from the target starting position to a delivery locker corresponding to the delivery locker seeking request; wherein the navigation path is a path in minimum time among a plurality of paths determined according to acquired user track data, and the plurality of paths includes paths from the target starting position to each delivery locker of said all delivery lockers;
acquiring (120; 206) a target delivery locker selected from the at least one delivery locker to be sought and a target navigation mode corresponding to the target delivery locker;
determining (130; 207; 307) a target navigation path corresponding to both the target starting position and the target navigation mode; and
guiding (140; 208; 308) the user to find the target delivery locker according to the target navigation path.

2. The method of claim 1, wherein before determining (110; 205) the target starting position where the user sending the delivery locker seeking request is located and determining the at least one delivery locker to be sought corresponding to the delivery locker seeking request based on the navigation path from the target starting position to the delivery locker corresponding to the delivery locker seeking request, the method further comprises:
publishing (201) at least one track data collection task corresponding to each delivery locker;
wherein the at least one track data collection task comprises a task starting position, a task ending position and a task rule, the task ending position is a geographic position of the corresponding delivery locker, and the task rule is walking or cycling;
acquiring (202) user track data of at least two users participating in the at least one track data collection task;
correcting (203) the user track data according to a preset rule; and
determining (204) a navigation path between the task starting position and the task ending position according to the corrected user track data.

3. The method of claim 2, wherein in a case where the task rule is walking, the user track data comprises a starting point check-in time, an ending point check-in time, a movement track and a walking distance; and
wherein acquiring (202) the user track data of the at least two users participating in the at least one track data collection task comprises:
after acquiring a task starting request of a user of the at least two users participating in the at least one track data collection task, detecting whether a current position of the user matches the task starting position;
in response to a detection result that the current position of the user matches the task starting position, recording current time as the starting point check-in time and starting to collect a real-time movement track and a real-time walking distance of the user;
after acquiring a task ending request of the user participating in the at least one track data collection task, detecting whether a current position of the user matches the task ending position; and
in response to a detection result that the current position of the user matches the task ending position, recording current time as the ending point check-in time, stopping collecting the real-time movement track and the real-time walking distance, and determining the movement track and the walking distance of the user in the at least one track data collection task.

4. The method of claim 2, wherein in a case where the task rule is cycling, the user track data comprises a starting point check-in time, an ending point check-in time, a movement track and a cycling time; and
wherein acquiring (202) the user track data of the at least two users participating in the at least one track data collection task comprises:
after acquiring a task starting request of a user of the at least two users participating in the at least one track data collection task, detecting whether a current position of the user matches the task starting position;
in response to a detection result that the current position of the user matches the task starting position, recording current time as the starting point check-in time, starting timing from the starting point check-in time, and starting to collect a real-time movement track of the user;
after acquiring a task ending request of the user participating in the at least one track data collection task, detecting whether a current position of the user matches the task ending position; and
in response to a detection result that the current position of the user matches the task ending position, recording current time as the ending point check-in time, stopping timing and collecting the real-time movement track, and determining the movement track and the cycling time of the user in the at least one track data collection task.

5. The method of claim 2, wherein determining the at least one delivery locker to be sought corresponding to the delivery locker seeking request based on the navigation path from the target starting position to the delivery locker corresponding to the delivery locker seeking request comprises:
determining (301) a distance between the target starting position and a geographic position of each delivery locker corresponding to the delivery locker seeking request according to the navigation path corresponding to the each delivery locker corresponding to the delivery locker seeking request and the target starting position; and
determining (302) a delivery locker whose distance is less than a preset distance threshold as a delivery locker to be sought.

6. The method of claim 5, wherein acquiring (120; 206) the target delivery locker selected from the at least one delivery locker to be sought and the target navigation mode corresponding to the target delivery locker comprises:
providing (303) the at least one delivery locker to be sought and a distance between the target starting position and the at least one delivery locker to be sought for the user matching the delivery locker seeking request;
acquiring (304) one target delivery locker fed back by the user based on the at least one delivery locker to be sought;
providing (305) all navigation modes for the user; and
acquiring (306) the target navigation mode fed back by the user based on all the navigation modes.

7. The method of claim 1, wherein the target navigation mode is walking navigation or cycling navigation.

8. A computer device, comprising:
one or more processors, and
a storage device storing at least the following program modules:
a first determination module (401) configured to determine a target starting position where a user sending a delivery locker seeking request is located and determine among all delivery lockers at least one delivery locker to be sought corresponding to the delivery locker seeking request based on a navigation path from the target starting position to a delivery locker corresponding to the delivery locker seeking request; wherein the navigation path is a path in minimum time among a plurality of paths determined according to acquired user track data, and the plurality of paths includes paths from the target starting position to each delivery locker of said all delivery lockers;
a second determination module (402) configured to acquire a target delivery locker selected from the at least one delivery locker to be sought and a target navigation mode corresponding to the target delivery locker;
a path determination module (403) configured to determine a target navigation path corresponding to both the target starting position and the target navigation mode; and
a path navigation module (404) configured to guide the user to find the target delivery locker according to the target navigation path.

9. The computer device of claim 8, wherein the storage device further stores:
a task publishing module configured to publish at least one track data collection task corresponding to each delivery locker; wherein the at least one track data collection task comprises a task starting position, a task ending position and a task rule, the task ending position is a geographic position of the corresponding delivery locker, and the task rule is walking or cycling;
a data acquisition module configured to acquire user track data of at least two users participating in the at least one track data collection task;
a data correction module configured to correct the user track data according to a preset rule; and
a path determination module configured to determine a navigation path between the task starting position and the task ending position according to the corrected user track data.

10. The computer device of claim 9, wherein in a case where the task rule is walking, the user track data comprises a starting point check-in time, an ending point check-in time, a movement track and a walking distance; and the data acquisition module comprises:
a first position matching unit configured to, after a task starting request of a user of the at least two users participating in the at least one track data collection task is acquired, detect whether a current position of the user matches the task starting position;
a first acquisition unit configured to, in response to a detection result that the current position of the user matches the task starting position, record current time as the starting point check-in time and start to collect a real-time movement track and a real-time walking distance of the user;
a second position matching unit configured to, after a task ending request of the user participating in the at least one track data collection task is acquired, detect whether a current position of the user matches the task ending position; and
a first determination unit configured to, in response to a detection result that the current position of the user matches the task ending position, record current time as the ending point check-in time, stop collecting the real-time movement track and the real-time walking distance, and determine the movement track and the walking distance of the user in the at least one track data collection task.

11. The computer device of claim 9, wherein in a case where the task rule is cycling, the user track data comprises a starting point check-in time, an ending point check-in time, a movement track and a cycling time; and the data acquisition module comprises:
a third position matching unit configured to, after a task starting request of a user of the at least two users participating in the at least one track data collection task is acquired, detect whether a current position of the user matches the task starting position;
a second acquisition unit configured to, in response to a detection result that the current position of the user matches the task starting position, record current time as the starting point check-in time, start timing from the starting point check-in time, and start to collect a real-time movement track of the user;
a fourth position matching unit configured to, after a task ending request of the user participating in the at least one track data collection task is acquired, detect whether a current position of the user matches the task ending position; and
a second determination unit configured to, in response to a detection result that the current position of the user matches the task ending position, record current time as the ending point check-in time, stop timing and collecting the real-time movement track, and determine the movement track and the cycling time of the user in the at least one track data collection task.

12. The computer device of claim 9, wherein the first determination module (401) comprises:
a distance determination unit configured to determine a distance between the target starting position and a geographic position of each delivery locker corresponding to the delivery locker seeking request according to the navigation path corresponding to the each delivery locker corresponding to the delivery locker seeking request and the target starting position; and
a delivery locker determination unit configured to determine a delivery locker whose distance is less than a preset distance threshold as a delivery locker to be sought.

13. The computer device of claim 12, wherein the second determination module (402) comprises:
a delivery locker providing unit configured to provide the at least one delivery locker to be sought and a distance between the target starting position and the at least one delivery locker to be sought for the user matching the delivery locker seeking request;
a delivery locker acquisition unit configured to acquire one target delivery locker fed back by the user based on the at least one delivery locker to be sought;
a navigation mode providing unit configured to provide all navigation modes for the user; and
a navigation mode acquisition unit configured to acquire the target navigation mode fed back by the user based on all the navigation modes.

14. The computer device of claim 8, wherein the target navigation mode is walking navigation or cycling navigation.

15. A computer-readable storage medium storing a computer program, wherein the computer program is configured to, when executed by a processor, perform the method of any one of claims 1 to 7.

## Patentansprüche

1. Verfahren zur Suche nach einem Paketschließfach, umfassend:
Bestimmen (110; 205) einer Zielstartposition, an der sich ein Benutzer befindet, der eine Suchanfrage für ein Paketschließfach sendet, und Bestimmen von mindestens einem zu suchenden Paketschließfach unter allen verfügbaren Paketschließfächern, das der Suchanfrage entspricht, basierend auf einem Navigationspfad von der Zielstartposition zu einem Paketschließfach, das der Suchanfrage zugeordnet ist; wobei der Navigationspfad der zeitlich kürzeste unter mehreren Pfaden ist, die gemäß erfassten Nutzerverlaufsdaten ermittelt werden, und die mehreren Pfade alle möglichen Wege von der Zielstartposition zu jedem Paketschließfach der verfügbaren Paketschließfächer umfassen;
Erfassen (120; 206) eines Ziel-Paketschließfachs, das aus dem mindestens einen zu suchenden Paketschließfach ausgewählt wurde, sowie eines Zielnavigationsmodus, der dem Ziel-Paketschließfach zugeordnet ist;
Bestimmen (130; 207; 307) eines Zielnavigationspfads, der sowohl der Zielstartposition als auch dem Zielnavigationsmodus entspricht; und
Führen (140; 208; 308) des Benutzers zum Auffinden des Ziel-Paketschließfachs gemäß dem Zielnavigationspfad.

2. Verfahren nach Anspruch 1, wobei vor dem Bestimmen (110; 205) der Zielstartposition, an der sich der Benutzer befindet, der die Suchanfrage für ein Paketschließfach sendet, und dem Bestimmen des mindestens einen zu suchenden Paketschließfachs entsprechend der Suchanfrage basierend auf dem Navigationspfad von der Zielstartposition zu dem Paketschließfach, das der Suchanfrage entspricht, das Verfahren ferner Folgendes umfasst:
Veröffentlichen (201) mindestens einer Track-Datenerfassungsaufgabe, die jedem Paketschließfach zugeordnet ist; wobei die mindestens eine Track-Datenerfassungsaufgabe eine Aufgabenstartposition, eine Aufgabenendposition und eine Aufgabenregel umfasst, die Aufgabenendposition eine geografische Position des entsprechenden Paketschließfachs ist, und die Aufgabenregel "zu Fuß" oder "Radfahren" vorsieht;
Erfassen (202) von Nutzer-Track-Daten mindestens zweier Benutzer, die an der mindestens einen Track-Datenerfassungsaufgabe teilnehmen;
Korrigieren (203) der Nutzer-Track-Daten gemäß einer vordefinierten Regel; und
Bestimmen (204) eines Navigationspfads zwischen der Aufgabenstartposition und der Aufgabenendposition anhand der korrigierten Nutzer-Track-Daten.

3. Verfahren nach Anspruch 2, wobei im Fall, dass die Aufgabenregel "zu Fuß" vorsieht, die Nutzer-Track-Daten eine Startpunkt-Check-in-Zeit, eine Endpunkt-Check-in-Zeit, eine Bewegungsroute und eine Gehstrecke umfassen; und
wobei das Erfassen (202) der Nutzer-Track-Daten der mindestens zwei Benutzer, die an der mindestens einen Track-Datenerfassungsaufgabe teilnehmen, Folgendes umfasst:
nach Erhalt einer Aufgabenstart-Anfrage eines Benutzers der mindestens zwei Benutzer, die an der mindestens einen Track-Datenerfassungsaufgabe teilnehmen, wird geprüft, ob eine aktuelle Position des Benutzers mit der Aufgabenstartposition übereinstimmt;
falls das Prüfergebnis zeigt, dass die aktuelle Position des Benutzers mit der Aufgabenstartposition übereinstimmt, wird die aktuelle Zeit als Startpunkt-Check-in-Zeit aufgezeichnet und mit der Erfassung der Echtzeit-Bewegungsroute sowie der Echtzeit-Gehstrecke des Benutzers begonnen;
nach Erhalt einer Aufgabenende-Anfrage des Benutzers, der an der mindestens einen Track-Datenerfassungsaufgabe teilnimmt, wird geprüft, ob die aktuelle Position des Benutzers mit der Aufgabenendposition übereinstimmt; und
falls das Prüfergebnis zeigt, dass die aktuelle Position des Benutzers mit der Aufgabenendposition übereinstimmt, wird die aktuelle Zeit als Endpunkt-Check-in-Zeit aufgezeichnet, die Erfassung der Echtzeit-Bewegungsroute und der Echtzeit-Gehstrecke beendet sowie die Bewegungsroute und die Gehstrecke des Benutzers in der mindestens einen Track-Datenerfassungsaufgabe bestimmt.

4. Verfahren nach Anspruch 2, wobei im Fall, dass die Aufgabenregel "Radfahren" vorsieht, die Nutzer-Track-Daten eine Startpunkt-Check-in-Zeit, eine Endpunkt-Check-in-Zeit, eine Bewegungsroute und eine Radfahrzeit umfassen; und
wobei das Erfassen (202) der Nutzer-Track-Daten der mindestens zwei Benutzer, die an der mindestens einen Track-Datenerfassungsaufgabe teilnehmen, folgendes umfasst:
nach Erhalt einer Aufgabenstart-Anfrage eines Benutzers der mindestens zwei Benutzer, die an der mindestens einen Track-Datenerfassungsaufgabe teilnehmen, wird geprüft, ob eine aktuelle Position des Benutzers mit der Aufgabenstartposition übereinstimmt;
falls das Prüfergebnis zeigt, dass die aktuelle Position des Benutzers mit der Aufgabenstartposition übereinstimmt, wird die aktuelle Zeit als Startpunkt-Check-in-Zeit aufgezeichnet, die Zeitmessung ab der Startpunkt-Check-in-Zeit gestartet und mit der Erfassung der Echtzeit-Bewegungsroute des Benutzers begonnen;
nach Erhalt einer Aufgabenende-Anfrage des Benutzers, der an der mindestens einen Track-Datenerfassungsaufgabe teilnimmt, wird geprüft, ob die aktuelle Position des Benutzers mit der Aufgabenendposition übereinstimmt; und
falls das Prüfergebnis zeigt, dass die aktuelle Position des Benutzers mit der Aufgabenendposition übereinstimmt, wird die aktuelle Zeit als Endpunkt-Check-in-Zeit aufgezeichnet, die Zeitmessung und die Erfassung der Echtzeit-Bewegungsroute beendet sowie die Bewegungsroute und die Radfahrzeit des Benutzers in der mindestens einen Track-Datenerfassungsaufgabe bestimmt.

5. Verfahren nach Anspruch 2, wobei das Bestimmen des mindestens einen zu suchenden Paketschließfachs, das der Paketschließfach-Suchanfrage entspricht, basierend auf dem Navigationspfad von der Zielstartposition zu dem der Suchanfrage entsprechenden Paketschließfach Folgendes umfasst:
Bestimmen (301) einer Entfernung zwischen der Zielstartposition und einer geografischen Position jedes der Suchanfrage entsprechenden Paketschließfachs gemäß dem Navigationspfad, der jedem der Suchanfrage entsprechenden Paketschließfach und der Zielstartposition zugeordnet ist; und
Festlegen (302) eines Paketschließfachs, dessen Entfernung unter einem vorgegebenen Entfernungsgrenzwert liegt, als ein zu suchendes Paketschließfach.

6. Verfahren nach Anspruch 5, wobei das Erfassen (120; 206) des aus dem mindestens einen zu suchenden Paketschließfach ausgewählten Ziel-Paketschließfachs und des dem Ziel-Paketschließfach entsprechenden Zielnavigationsmodus folgendes umfasst:
Bereitstellen (303) des mindestens einen zu suchenden Paketschließfachs und einer Entfernung zwischen der Zielstartposition und dem mindestens einen zu suchenden Paketschließfach für den Benutzer, der der Paketschließfach-Suchanfrage entspricht;
Erfassen (304) eines durch den Benutzer basierend auf dem mindestens einen zu suchenden Paketschließfach zurückgemeldeten Ziel-Paketschließfachs;
Bereitstellen (305) aller Navigationsmodi für den Benutzer; und
Erfassen (306) des durch den Benutzer basierend auf allen Navigationsmodi zurückgemeldeten Zielnavigationsmodus.

7. Verfahren nach Anspruch 1, wobei der Zielnavigationsmodus eine Fußgängernavigation oder eine Fahrradnavigation ist.

8. Computer-Vorrichtung, umfassend:
einen oder mehrere Prozessoren, und
ein Speichergerät, das mindestens die folgenden Programmmodule speichert:
ein erstes Bestimmungsmodul (401), konfiguriert zum Bestimmen einer Zielstartposition, an der sich ein Benutzer befindet, der eine Paketschließfach-Suchanfrage sendet, und zum Bestimmen von mindestens einem zu suchenden Paketschließfach unter allen Paketschließfächern, das der Paketschließfach-Suchanfrage entspricht, basierend auf einem Navigationspfad von der Zielstartposition zu einem der Suchanfrage entsprechenden Paketschließfach; wobei der Navigationspfad ein Pfad mit minimaler Zeit unter mehreren Pfaden ist, die gemäß erfassten Nutzerverlaufsdaten bestimmt werden, und die mehreren Pfade Pfade von der Zielstartposition zu jedem Paketschließfach der genannten allen Paketschließfächer umfassen;
ein zweites Bestimmungsmodul (402), konfiguriert zum Erfassen eines aus dem mindestens einen zu suchenden Paketschließfach ausgewählten Ziel-Paketschließfachs und eines dem Ziel-Paketschließfach entsprechenden Zielnavigationsmodus;
ein Pfadbestimmungsmodul (403), konfiguriert zum Bestimmen eines Zielnavigationspfads, der sowohl der Zielstartposition als auch dem Zielnavigationsmodus entspricht; und
ein Pfadnavigationsmodul (404), konfiguriert zum Führen des Benutzers zur Auffindung des Ziel-Paketschließfachs gemäß dem Zielnavigationspfad.

9. Computer-Vorrichtung nach Anspruch 8, wobei das Speichergerät ferner Folgendes speichert:
ein Aufgabenveröffentlichungsmodul, konfiguriert zum Veröffentlichen mindestens einer Bewegungsdaten-Erfassungsaufgabe, die jedem Paketschließfach zugeordnet ist; wobei die mindestens eine Bewegungsdaten-Erfassungsaufgabe eine Aufgabenstartposition, eine Aufgabenendposition und eine Aufgabenregel umfasst, die Aufgabenendposition eine geografische Position des entsprechenden Paketschließfachs ist, und die Aufgabenregel "zu Fuß" oder "Radfahren" vorgibt;
ein Datenerfassungsmodul, konfiguriert zum Erfassen von Nutzerbewegungsdaten mindestens zweier Benutzer, die an der mindestens einen Bewegungsdaten-Erfassungsaufgabe teilnehmen;
ein Datenkorrekturmodul, konfiguriert zum Korrigieren der Nutzerbewegungsdaten gemäß einer vordefinierten Regel; und
ein Pfadberechnungsmodul, konfiguriert zum Bestimmen eines Navigationspfads zwischen der Aufgabenstartposition und der Aufgabenendposition basierend auf den korrigierten Nutzerbewegungsdaten.

10. Computer-Vorrichtung nach Anspruch 9, wobei im Fall, dass die Aufgabenregel "zu Fuß" vorgibt, die Nutzerbewegungsdaten eine Startpunkt-Check-in-Zeit, eine Endpunkt-Check-in-Zeit, eine Bewegungsroute und eine Gehstrecke umfassen: und wobei das Datenerfassungsmodul Folgendes umfasst:
eine erste Positionsabgleich-Einheit, konfiguriert zum Detektieren, ob eine aktuelle Position des Benutzers mit der Aufgabenstartposition übereinstimmt, nachdem eine Aufgabenstart-Anfrage eines Benutzers der mindestens zwei Benutzer, die an der mindestens einen Bewegungsdaten-Erfassungsaufgabe teilnehmen, empfangen wurde;
eine erste Erfassungseinheit, konfiguriert zum Aufzeichnen der aktuellen Zeit als Startpunkt-Check-in-Zeit und zum Starten der Erfassung einer Echtzeit-Bewegungsroute und einer Echtzeit-Gehstrecke des Benutzers, wenn die aktuelle Position des Benutzers mit der Aufgabenstartposition übereinstimmt;
eine zweite Positionsabgleich-Einheit, konfiguriert zum Detektieren, ob eine aktuelle Position des Benutzers mit der Aufgabenendposition übereinstimmt, nachdem eine Aufgabenende-Anfrage des an der Bewegungsdaten-Erfassungsaufgabe teilnehmenden Benutzers empfangen wurde; und
eine erste Bestimmungseinheit, konfiguriert zum Aufzeichnen der aktuellen Zeit als Endpunkt-Check-in-Zeit, zum Stoppen der Erfassung der Echtzeit-Bewegungsroute und der Echtzeit-Gehstrecke sowie zum Bestimmen der Bewegungsroute und der Gehstrecke des Benutzers für die Bewegungsdaten-Erfassungsaufgabe, wenn die aktuelle Position des Benutzers mit der Aufgabenendposition übereinstimmt.

11. Computer-Vorrichtung nach Anspruch 9, wobei im Fall, dass die Aufgabenregel "Radfahren" vorgibt, die Nutzerbewegungsdaten eine Startpunkt-Check-in-Zeit, eine Endpunkt-Check-in-Zeit, eine Bewegungsroute und eine Radfahrzeit umfassen; und wobei das Datenerfassungsmodul Folgendes umfasst:
eine dritte Positionsabgleich-Einheit, konfiguriert zum Detektieren, ob eine aktuelle Position des Benutzers mit der Aufgabenstartposition übereinstimmt, nachdem eine Aufgabenstart-Anfrage eines Benutzers der mindestens zwei Benutzer, die an der mindestens einen Bewegungsdaten-Erfassungsaufgabe teilnehmen, empfangen wurde;
eine zweite Erfassungseinheit, konfiguriert zum Aufzeichnen der aktuellen Zeit als Startpunkt-Check-in-Zeit, Starten der Zeitmessung ab der Startpunkt-Check-in-Zeit und Beginnen der Erfassung einer Echtzeit-Bewegungsroute des Benutzers, wenn die aktuelle Position des Benutzers mit der Aufgabenstartposition übereinstimmt;
eine vierte Positionsabgleich-Einheit, konfiguriert zum Detektieren, ob eine aktuelle Position des Benutzers mit der Aufgabenendposition übereinstimmt, nachdem eine Aufgabenende-Anfrage des an der Bewegungsdaten-Erfassungsaufgabe teilnehmenden Benutzers empfangen wurde; und
eine zweite Bestimmungseinheit, konfiguriert zum Aufzeichnen der aktuellen Zeit als Endpunkt-Check-in-Zeit, Stoppen der Zeitmessung und der Erfassung der Echtzeit-Bewegungsroute sowie zum Bestimmen der Bewegungsroute und der Radfahrzeit des Benutzers für die Bewegungsdaten-Erfassungsaufgabe, wenn die aktuelle Position des Benutzers mit der Aufgabenendposition übereinstimmt.

12. Computer-Vorrichtung nach Anspruch 9, wobei das erste Bestimmungsmodul (401) Folgendes umfasst:
eine Entfernungsbestimmungseinheit, konfiguriert zum Bestimmen einer Entfernung zwischen der Zielstartposition und einer geografischen Position jedes der Paketschließfach-Suchanfrage entsprechenden Paketschließfachs gemäß dem Navigationspfad, der jedem der Paketschließfach-Suchanfrage entsprechenden Paketschließfach und der Zielstartposition zugeordnet ist; und
eine Paketschließfach-Bestimmungseinheit, konfiguriert zum Festlegen eines Paketschließfachs, dessen Entfernung unter einem vorgegebenen Entfernungsgrenzwert liegt, als ein zu suchendes Paketschließfach.

13. Computer-Vorrichtung nach Anspruch 12, wobei das zweite Bestimmungsmodul (402) Folgendes umfasst:
eine Paketschließfach-Bereitstellungseinheit, konfiguriert zum Bereitstellen des mindestens einen zu suchenden Paketschließfachs und einer Entfernung zwischen der Zielstartposition und dem mindestens einen zu suchenden Paketschließfach für den Benutzer, der der Paketschließfach-Suchanfrage entspricht;
eine Paketschließfach-Erfassungseinheit, konfiguriert zum Erfassen eines durch den Benutzer basierend auf dem mindestens einen zu suchenden Paketschließfach zurückgemeldeten Ziel-Paketschließfachs;
eine Navigationsmodus-Bereitstellungseinheit, konfiguriert zum Bereitstellen aller Navigationsmodi für den Benutzer; und
eine Navigationsmodus-Erfassungseinheit, konfiguriert zum Erfassen des durch den Benutzer basierend auf allen Navigationsmodi zurückgemeldeten Zielnavigationsmodus.

14. Computer-Vorrichtung nach Anspruch 8, wobei der Zielnavigationsmodus eine Fußgängernavigation oder eine Fahrradnavigation ist.

15. Computerlesbares Speichermedium, das ein Computerprogramm speichert, wobei das Computerprogramm konfiguriert ist, bei Ausführung durch einen Prozessor das Verfahren nach einem der Ansprüche 1 bis 7 durchzuführen.

## Revendications

1. Procédé de recherche de casier de livraison, comprenant :
déterminer (110 ; 205) une position de départ cible où un utilisateur qui envoie une requête de recherche de casier de livraison est situé et déterminer parmi tous les casiers de livraison au moins un casier de livraison correspondant à la requête de recherche de casier de livraison basé sur un chemin de navigation depuis la position de départ cible jusqu'au casier de livraison correspondant à la requête de recherche de casier de livraison ; dans lequel le chemin de navigation est un chemin à temps minimal parmi une pluralité de chemins déterminés en fonction des données de suivi d'utilisateur acquises, et la pluralité de chemins inclut des chemins depuis la position de départ cible jusqu'à chaque casier de livraison desdits tous les casiers de livraison ;
acquérir (120 ; 206) un casier de livraison cible sélectionné parmi le au moins un casier de livraison à chercher et un mode de navigation cible correspondant au casier de livraison cible ;
déterminer (130 ; 207 ; 307) un chemin de navigation cible correspondant à la fois à la position de départ cible et au mode navigation cible ; et
guider (140 ; 208 ; 308) l'utilisateur afin qu'il trouve le casier de livraison cible en fonction du chemin de navigation cible.

2. Procédé selon la revendication 1, dans lequel avant de déterminer (110 ; 205) la position de départ cible où l'utilisateur qui envoie une requête de recherche de casier de livraison est situé et déterminer le au moins un casier de livraison correspondant à la requête de recherche de casier de livraison basé sur le chemin de navigation depuis la position de départ cible jusqu'au casier de livraison correspondant à la requête de recherche de casier de livraison, le procédé comprend en outre :
publier (201) au moins une tâche de collecte de données de suivi correspondant à chaque casier de livraison ; dans lequel la au moins une tâche de collecte de données de suivi comprend une position de départ de tâche, une position de fin de tâche et une règle de tâche, la position de fin de tâche est une position géographique du casier de livraison correspondant, et la règle de tâche consiste à marcher ou à faire du cyclisme ;
acquérir (202) les données de suivi utilisateur d'au moins deux utilisateurs participant à la au moins une tâche de collecte de données de suivi ;
corriger (203) les données de suivi utilisateur en fonction d'une règle prédéfinie ; et
déterminer (204) un chemin de navigation entre la position de départ de tâche et la position de fin de tâche en fonction des données de suivi utilisateur corrigées.

3. Procédé selon la revendication 2, dans lequel dans le cas où la règle de tâche consiste à marcher, les données utilisateur comprennent une heure d'arrivée au point de départ, une heure d'arrivée au point d'arrivée, un suivi de mouvement et une distance de marche ; et
dans lequel acquérir (202) les données de suivi utilisateur d'au moins deux utilisateurs participant à la au moins une tâche de collecte de données de suivi comprend :
après acquisition de la requête de départ de tâche de l'utilisateur des au moins deux utilisateurs participant à la au moins une tâche de collecte de données de suivi, détecter si la position actuelle de l'utilisateur correspond à la position de départ de tâche ;
en réponse à un résultat de détection selon lequel la position actuelle de l'utilisateur correspond à la position de départ de tâche, enregistrer l'heure actuelle comme heure d'arrivée au point de départ et commencer à collecter un suivi de mouvement en temps réel et la distance de marche en temps réel de l'utilisateur ;
après acquisition de la requête de fin de tâche de l'utilisateur participant à la au moins une tâche de collecte de données de suivi, détecter si la position actuelle de l'utilisateur correspond à la position de fin de tâche ; et
en réponse au résultat de détection selon lequel la position actuelle de l'utilisateur correspond à la position de fin de tâche, enregistrer l'heure actuelle comme heure d'arrivée au point d'arrivée, cesser de collecter le suivi de mouvement en temps réel et la distance de marche en temps réel, et déterminer le suivi de mouvement et la distance de marche de l'utilisateur dans la au moins une tâche de collecte de données de suivi.

4. Procédé selon la revendication 2, dans lequel dans le cas où la règle de tâche est de faire du cyclisme, les données utilisateur comprennent une heure d'arrivée au point de départ, une heure d'arrivée au point d'arrivée, un suivi de mouvement et une durée de cyclisme ; et
dans lequel acquérir (202) les données de suivi utilisateur d'au moins deux utilisateurs participant à la au moins une tâche de collecte de données de suivi comprend :
après acquisition de la requête de départ de tâche de l'utilisateur des au moins deux utilisateurs participant à la au moins une tâche de collecte de données de suivi, détecter si la position actuelle de l'utilisateur correspond à la position de départ de tâche ;
en réponse à un résultat de détection selon lequel la position actuelle de l'utilisateur correspond à la position de départ de tâche, enregistrer l'heure actuelle comme heure d'arrivée au point de départ et commencer à minuter depuis l'heure d'arrivée au point de départ, et commencer à collecter le suivi de mouvement en temps réel de l'utilisateur ;
après acquisition de la requête de fin de tâche de l'utilisateur participant à la au moins une tâche de collecte de données de suivi, détecter si la position actuelle de l'utilisateur correspond à la position de fin de tâche ; et
en réponse au résultat de détection selon lequel la position actuelle de l'utilisateur correspond à la position de fin de tâche, enregistrer l'heure actuelle comme heure d'arrivée au point d'arrivée, cesser de minuter et de collecter le suivi de mouvement en temps réel, et déterminer le suivi de mouvement et la durée de cyclisme de l'utilisateur dans la au moins une tâche de collecte de données de suivi.

5. Procédé selon la revendication 2, dans lequel déterminer le au moins un casier de livraison correspondant à la requête de recherche de casier de livraison basé sur le chemin de navigation depuis la position de départ cible jusqu'au casier de livraison correspondant à la requête de recherche de casier de livraison, le procédé comprend :
déterminer (301) la distance entre la position de départ cible et une position géographique de chaque casier de livraison correspondant à la requête de recherche de casier de livraison en fonction du chemin de navigation correspondant à chaque casier de livraison correspondant à la requête de recherche de casier de livraison et à la position de départ cible ; et
déterminer (302) un casier de livraison dont la distance est inférieure à un seuil de distance prédéfini comme casier de livraison à chercher.

6. Procédé selon la revendication 5, dans lequel acquérir (120; 206) un casier de livraison cible sélectionné parmi le au moins un casier de livraison à chercher et un mode de navigation cible correspondant au casier de livraison cible comprend :
fournir (303) le au moins un casier de livraison à chercher et la distance entre la position de départ cible et le au moins un casier de livraison à chercher pour l'utilisateur correspondant à la requête de recherche de casier de livraison ;
acquérir (304) un casier de livraison cible renvoyé par l'utilisateur basé sur le au moins un casier de livraison à chercher ;
fournir (305) tous les modes de navigation pour l'utilisateur ; et
acquérir (306) le mode de navigation cible renvoyé par l'utilisateur basé sur tous les modes de navigation.

7. Procédé selon la revendication 1, dans lequel le mode de navigation cible est une navigation par marche ou une navigation par cyclisme.

8. Dispositif informatique, comprenant :
un ou plusieurs processeurs, et
un dispositif de stockage stockant au moins les modules de programmes suivants :
un premier module de détermination (401) configuré pour déterminer une position de départ cible où un utilisateur qui envoie une requête de recherche de casier de livraison est situé et déterminer parmi tous les casiers de livraison au moins un casier de livraison correspondant à la requête de recherche de casier de livraison basé sur un chemin de navigation depuis la position de départ cible jusqu'au casier de livraison correspondant à la requête de recherche de casier de livraison ; dans lequel le chemin de navigation est un chemin à temps minimal parmi une pluralité de chemins déterminés en fonction des données de suivi d'utilisateur acquises, et la pluralité de chemins inclut des chemins depuis la position de départ cible jusqu'à chaque casier de livraison desdits tous les casiers de livraison ;
un deuxième module de détermination (402) configuré pour acquérir un casier de livraison cible sélectionné parmi le au moins un casier de livraison à chercher et un mode de navigation cible correspondant au casier de livraison cible ;
un module de détermination de chemin (403) configuré pour déterminer un chemin de navigation cible correspondant à la fois à la position de départ cible et au mode de navigation cible ; et
un module de chemin de navigation (404) configuré pour guider l'utilisateur afin qu'il trouve le casier de livraison cible en fonction du chemin de navigation cible.

9. Dispositif informatique selon la revendication 8, dans lequel le dispositif de stockage stocke en outre :
un module de publication de tâche configuré pour publier au moins une tâche de collecte de données de suivi correspondant à chaque casier de livraison ; dans lequel la au moins une tâche de collecte de données de suivi comprend une position de départ de tâche, une position de fin de tâche et une règle de tâche, la position de fin de tâche est une position géographique du casier de livraison correspondant, et la règle de tâche consiste à marcher ou à faire du cyclisme ;
un module d'acquisition de données configuré pour to acquérir des données de suivi utilisateur d'au moins deux utilisateurs participant à la au moins une tâche de collecte de données de suivi ;
un module de correction de données configuré pour corriger les données de suivi utilisateur en fonction d'une règle prédéfinie ; et un module de détermination de chemin configuré pour déterminer un chemin de navigation entre la position de départ de tâche et la position de fin de tâche en fonction des données de suivi utilisateur corrigées.

10. Dispositif informatique selon la revendication 9, dans lequel dans le cas où la règle de tâche consiste à marcher, les données utilisateur comprennent une heure d'arrivée au point de départ, une heure d'arrivée au point d'arrivée, un suivi de mouvement et une distance de marche ; et le module d'acquisition de données comprend :
une première unité de correspondance de position configurée pour, une fois que la requête de départ de tâche d'un utilisateur des aux moins deux utilisateurs participant à la au moins une tâche de collecte de données de suivi est acquise, détecter si la position actuelle de l'utilisateur correspond à la position de départ de tâche ;
une première unité d'acquisition configurée pour, en réponse à un résultat de détection selon lequel la position actuelle de l'utilisateur correspond à la position de départ de tâche, enregistrer l'heure actuelle comme heure d'arrivée au point de départ et commencer à collecter un suivi de mouvement en temps réel et la distance de marche en temps réel de l'utilisateur ;
une deuxième unité de correspondance de position configurée pour, une fois que la requête de fin de tâche d'un utilisateur participant à la au moins une tâche de collecte de données de suivi est acquise, détecter si la position actuelle de l'utilisateur correspond à la position de fin de tâche ; et
une première unité de détermination configurée pour, en réponse au résultat de détection selon lequel la position actuelle de l'utilisateur correspond à la position de fin de tâche, enregistrer l'heure actuelle comme heure d'arrivée au point d'arrivée, cesser de collecter le suivi de mouvement en temps réel et la distance de marche en temps réel, et déterminer le suivi de mouvement et la distance de marche de l'utilisateur dans la au moins une tâche de collecte de données de suivi.

11. Dispositif informatique selon la revendication 9, dans lequel dans le cas où la règle de tâche est de faire du cyclisme, les données utilisateur comprennent une heure d'arrivée au point de départ, une heure d'arrivée au point d'arrivée, un suivi de mouvement et une durée de cyclisme ; et le module d'acquisition de données comprend :
une troisième unité de correspondance de position configurée pour, une fois que la requête de départ de tâche de l'utilisateur des au moins deux utilisateurs participant à la au moins une tâche de collecte de données de suivi est acquise, détecter si la position actuelle de l'utilisateur correspond à la position de départ de tâche ;
une deuxième unité d'acquisition configurée pour, en réponse à un résultat de détection selon lequel la position actuelle de l'utilisateur correspond à la position de départ de tâche, enregistrer l'heure actuelle comme heure d'arrivée au point de départ et commencer à minuter depuis l'heure d'arrivée au point de départ, et commencer à collecter le suivi de mouvement en temps réel de l'utilisateur ;
une quatrième unité de correspondance de position configurée pour, une fois que la requête de fin de tâche de l'utilisateur participant à la au moins une tâche de collecte de données de suivi est acquise, détecter si la position actuelle de l'utilisateur correspond à la position de fin de tâche ; et
une deuxième unité de détermination configurée pour, en réponse à un résultat de détection selon lequel la position actuelle de l'utilisateur correspond à la position de fin de tâche, enregistrer l'heure actuelle comme heure d'arrivée au point d'arrivée, cesser de minuter et de collecter le suivi de mouvement en temps réel, et déterminer le suivi de mouvement et la durée de cyclisme de l'utilisateur dans la au moins une tâche de collecte de données de suivi.

12. Dispositif informatique selon la revendication 9, dans lequel le premier module de détermination (401) comprend :
une unité de détermination de distance configurée pour déterminer la distance entre la position de départ cible et une position géographique de chaque casier de livraison correspondant à la requête de recherche de casier de livraison en fonction du chemin de navigation correspondant à chaque casier de livraison correspondant à la requête de recherche de casier de livraison et à la position de départ cible ; et
une unité de détermination de casier de livraison configurée pour déterminer un casier de livraison dont la distance est inférieure à un seuil de distance prédéfini comme casier de livraison à chercher.

13. Dispositif informatique selon la revendication 12, dans lequel le deuxième module de détermination (402) comprend :
une unité de fourniture de casier de livraison configurée pour fournir le au moins un casier de livraison à chercher et la distance entre la position de départ cible et le au moins un casier de livraison à chercher pour l'utilisateur correspondant à la requête de recherche de casier de livraison ;
une unité d'acquisition de casier de livraison configurée pour acquérir un casier de livraison cible renvoyé par l'utilisateur basé sur le au moins un casier de livraison à chercher ;
une unité de fourniture de mode de navigation configurée pour fournir tous les modes de navigation pour l'utilisateur ; et
une unité d'acquisition de mode de navigation configurée pour acquérir le mode de navigation cible renvoyé par l'utilisateur basé sur tous les modes de navigation.

14. Dispositif informatique selon la revendication 8, dans lequel le mode de navigation cible est une navigation par marche ou une navigation par cyclisme.

15. Support de stockage lisible par ordinateur stockant un programme informatique, dans lequel le programme informatique est configuré pour, lorsqu'exécuté par un processeur, mettre en œuvre le procédé selon l'une quelconque des revendications 1 à 7.
